# EUROPEAN PATENT SPECIFICATION

(11) **EP 0 455 466 B1**
(45) Date of publication and mention of the grant of the patent: **26.10.1994**
(21) Application number: 91303907.9
(22) Date of filing: 30.04.1991
(51) Int. Cl.: F21V 8/00, F21V 21/04, F21S 5/00

(54) **Decorative light fittings**
Dekorative Leuchten
Appareils d'éclairage décoratifs

(30) Priority: 02.05.1990 GB 9009877
(43) Date of publication of application: 06.11.1991
(73) Proprietor: Rowe, Paul Graham, Worcester Park Surrey KT4 8PN (GB)
(72) Inventor: Rowe, Paul Graham, Worcester Park Surrey KT4 8PN (GB)
(74) Representative: Heath, Peter William Murray

(56) References cited:
- EP-A- 0 058 884
- DE-C- 815 181
- FR-A- 1 452 709
- US-A- 4 576 436

## Description

This invention relates to light fittings, and more particularly but not exclusively to decorative light fittings of the kind incorporating, as the immediate or secondary light source, the emission end of a bundle of optic fibres connecting at their other end, usually with a multiplicity of similar optic bundles, to receive light from a single primary light source.

It is known to provide such secondary light sources in a manner whereby they project through a surface, such as a false ceiling, ceiling panel or a vertical panel, in association with other such lights to provide a decorative and interesting pattern of light. To enhance the light it is known to provide the end of the bundle of fibres constituting the secondary light source with a superimposed lens system, such a system and its fitting to the end of the optic fibre bundle adds to the complexity and cost of the installation to a significant, and often unacceptable, extent.

US-PS-4576436 discloses a method and apparatus for uniformly distributing a substantially parallel beam of light from a light conducting cable along a solid light conducting rod of fixed length using a series of embedded beam splitting mirrors. The solid nature of the conducting rod renders it unsatisfactory for use with light fittings where a flexible light conductor such as a bundle of optic fibres is necessary to pass through a reflector to position the emission end of the light conductor below the reflector.

It is an object of the present invention to enable the provision of enhancement to a decorative light arrangement of the kind described of simple and effective nature and which is capable of easy and rapid connection to a support.

In accordance with one aspect of the present invention there is provided a decorative light fitting including a reflector member having a reflective surface portion in association with which, in use, a secondary light source is arranged to be disposed, the reflector member being arranged for connection to a support member and the light fitting being characterised in that the secondary light source is the emission end of a bundle of optic fibres which passes from the reflective surface portion of the reflector member through the support member to a primary light source.

The reflector member may be three dimensional and may be, in plan view, of circular, oval or square cross section or of any other convenient and appropriately decorative configuration. The reflector member may be dependent from a stem adapted to pass through a support board such as a ceiling tile or a vertical partitioning panel, the stem being arranged for securement to the support board.

The stem may be hollow and may open onto the reflective surface portion of the reflector member, and may be arranged to carry the optic bundle through the support board with the emission end of the optic bundle projecting into the reflective surface of the reflector member.

The reflector member may be provided with a lip around the reflective surface portion thereof which may be arranged to be seated against an outer surface of the support board, the reflective surface portion thereof being arranged to be located within a recess in the support board.

The three dimensional reflective surface portion of the reflector member may be of a configuration chosen for its particular reflective effect upon the secondary light source, and the end of optic bundle comprising that secondary light source may be similarly shaped to cooperate with the chosen configuration of the portion to provide a decorative lighting effect of a desired nature.

The reflective surface portion may be convex, or, may in one preferred embodiment, be concave.

In accordance with another aspect of the present invention there is provided a decorative light fitting in which the light is provided by a secondary light source comprising the emission end of a bundle of optic fibres linking at their other end in light collecting relationship to a primary light source, the fitting including a reflector member having a reflective surface, the reflector member being apertured for the passage therethrough of the optic bundle so that the end thereof lies at or protrudes beyond the reflective surface, the reflector being carried by a hollow stem member on the side remote from the reflective surface connecting with the aperture through the reflector member, the stem being adapted in use for projection through a bore in a support board and for carrying the fibre bundle therethrough; and a securement member including a collar adapted to attach to the stem immediately behind the reflector member, and a plurality of outwardly extending flexible tab members capable of being resiliently folded to lie generally parallel to the hollow stem, so that, in mounting, the hollow stem together with the folded tabs can pass through the appropriate bore in the support board, the hollow tabs being provided on their outer sides with surface features adapted in use to engage the sides of the bore so as firmly to secure the fitting to the support board.

The collar may be arranged to fit within an annular groove about the stem or behind shoulders thereon closely adjacent to the relector member.

Where the reflector member includes on its front face a concave reflective surface, and generally includes a concave portion, the collar may similarly be concave so as to fit closely behind the concave portion of the reflector member.

The tabs may conveniently be formed of a resilient metal or plastics material, and the outside surfaces thereof may be provided with protrusions across their width arranged, when folded generally parallel to the stem and inserted through the bore in use, to engage with the inner surface of the bore.

The stem may be provided with a plurality of longitudinal slits in its wall to enable it to be compressed in its passage through the bore in the support board. To increase the effectiveness of such slots, the stem may be formed of a stiffly resilient plastics material, and may be integral with the reflector member, the reflective surface of which may be provided with a vacuum deposited surface of brass (for example) to increase its reflective ability.

In order that the invention may be more readily understood one embodiment thereof will now be described by way of example with reference to the accompanying drawings in which:-
Figure 1 is a sectional elevation of a light fitting in accordance with the invention;
Figure 2 is a partial plan view of the arrangement of Figure 1;
Figure 3 is a partial underplan view of a securement member for use with the fitting of Figure 1;
Figure 4 is a fragmentary side elevation on the line A-A of Figure 3;
Figure 5 is a partial side elevation of the securement member of Figure 3;
Figure 6 is an isometric view illustrating the placing of a light fitting illustrated in the other figures in a support board; and
Figure 7 is a variation of the fitting of Figure 1.

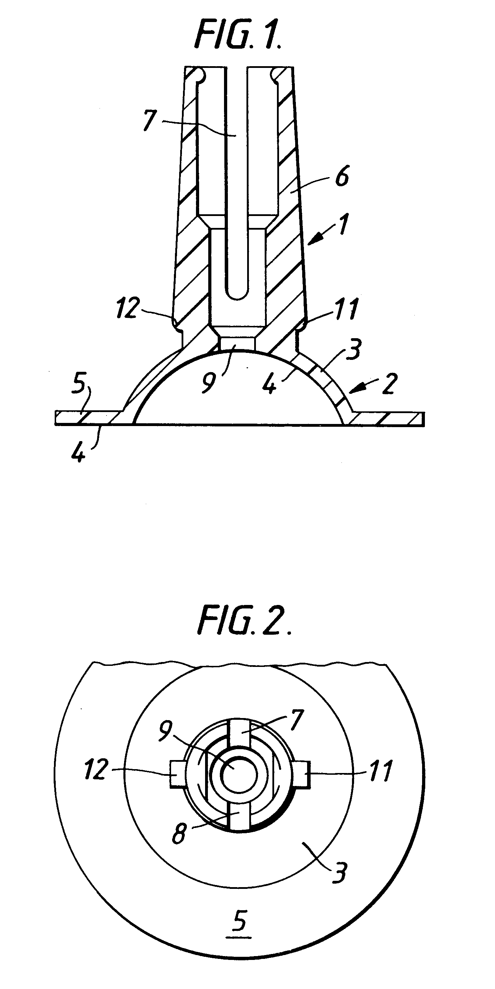

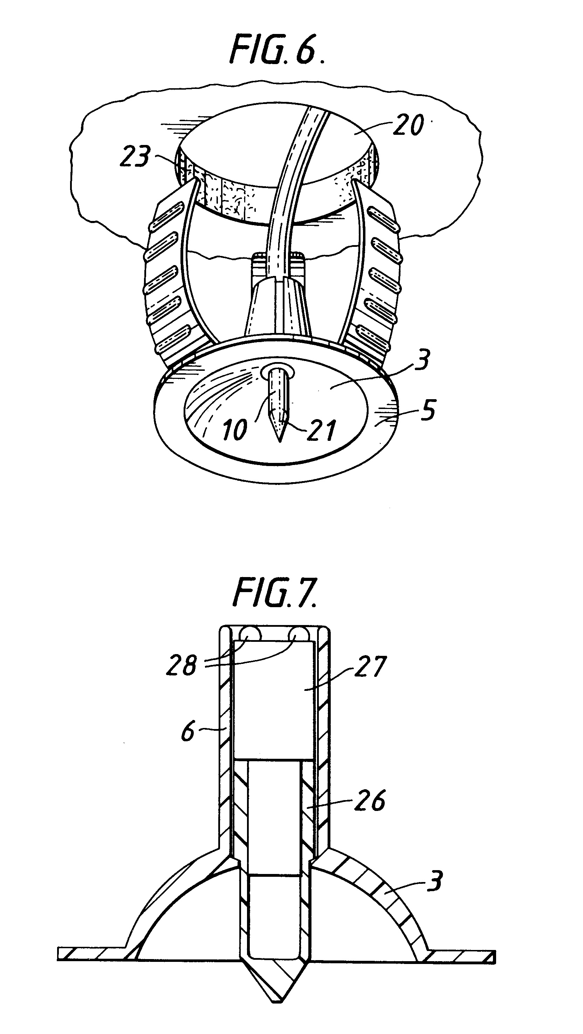

Referring now to the drawings, and particularly to Figures 1, 2 and 6 it is to be observed that a light fitting 1 of stiffly resilient plastics material comprises a reflector member 2 having a portion 3 of partially semispherical configuration and a surrounding flat annular lip 5. The reflector member in practice is provided on its lower surface (as viewed) with a vacuum deposit of "brass" colouring (for example) to provide an appropriately brilliant or matt reflective surface 4. Extending upwardly from the rear of the reflector member 2 and integral therewith is a hollow mounting stem 6 having opposite slots 7,8 down its length to provide resilience across its width, the hollow stem opening into the reflector member at aperture 9 and being adapted to carry the emission end of an optic fibre bundle 10, as best seen in Figure 6, to provide, by means of this secondary light source, a light within the bowl of the concave reflector.

It is to be noted that two diametrically opposed shoulders 11,12 are provided around the stem 6 at its junction with the reflector portion.

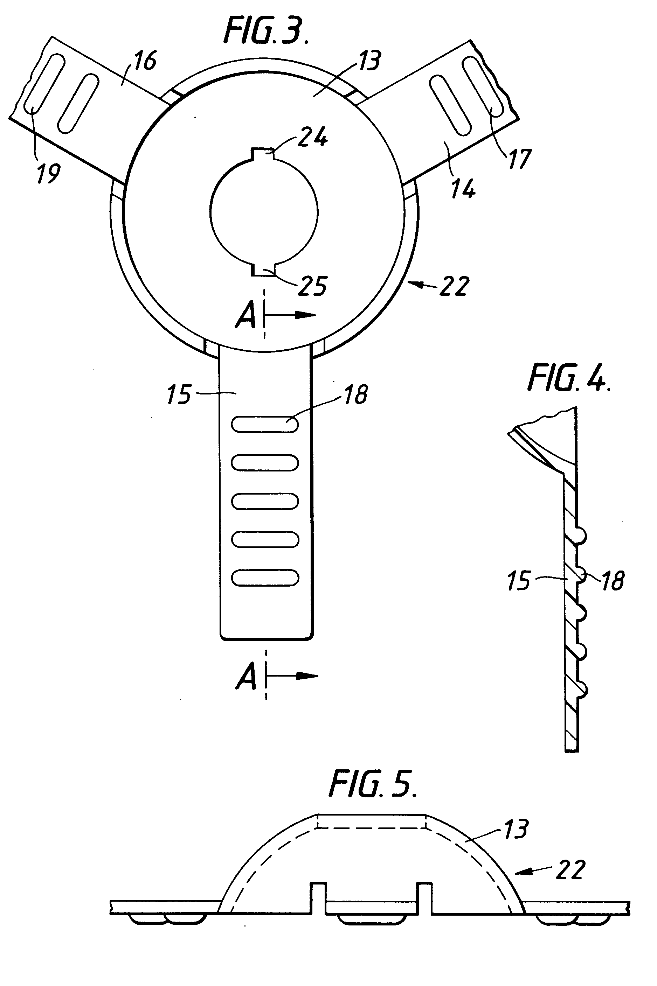

The securement member 22 is shown in Figures 3, 4, 5 and 6 and comprises a collar 13 of partially hemispherical configuration which is adapted to be fitted beneath the shoulders 11,12 at the base of the stem 6 of the reflector and conform about the concave portion thereof. Slots 24,25 in the collar enable it to be fitted over the shoulders 11,12 and then turned so that the collar 13 is held beneath the shoulders 11,12.

Three radially extending tabs 14,15,16 are provided on the securement member, these being resiliently bendable so as to lie generally parallel to the stem of the reflector as shown in Figure 6, and carry on their outer sides (in this configuration) a plurality of protrusions 17,18,19.

In operation, a bore 20 is made in the ceiling tile or partition panel to which the light fitting is to be secured, the optic fibre bundle 10 is passed through the bore and into the stem 6 of the fitting such that the emission end of the optic fibre bundle is disposed protruding through the opening from the hollow stem and lying within the concave bowl 3 of the reflector, as again can be seen in Figure 6. It is to be noted from Figure 6 that the very end 21 of the bundle of optic fibres may be shaped so as to provide, with the configuration of the bowl 3 of the reflector, a particular pattern of decorative lighting. Alternatively, as can be seen in Figure 7, a bulb 26, which may be formed of an acrylic material for example which may be clear or of one of a variety of colours, may be disposed within the stem 6 of the fitting so as to protrude into the concave bulb 3 of the reflector. The bulb 26 may be held in its position by means of a brass ferrule 27, the bulb 26 and ferrule 27 being "snap" fits into the stem 6 by means of protrusions 28. With such an arrangement the bundle of optic fibres (not shown in Figure 7) is arranged to terminate within the bulb 26.

The tabs 14,15,16 of the securement member 22 are now bent back to the disposition shown in Figure 6, lying generally parallel with the stem 6 of the fitting, and the total unit is brought up to the bore 20 already formed in the ceiling tile or partition panel, and is then pushed into the bore 20 such that the resilient tabs 14,15,16 press outwards against the side 23 of the bore and the protrusions thereon 17,18,19 engage with the side 23 so as to hold the fitting firmly in location. It is to be observed that the lip 5 around the bowl 3 of the reflector portion seats around the bore in the support board so as to ensure a neat and attractive appearance.

By means of the invention as particularly described hereinabove it is to be seen that we have provided a simple, effective and convenient manner of providing decorative lighting, which is simple and sure to mount in a required position.

It is to be understood that the foregoing is merely exemplary of light fittings in accordance with the invention and that modifications can readily be made thereto without departing from the true scope of the invention, which is defined in the claims.

## Claims

1. A decorative light fitting including a reflector member (2) having a reflective surface portion (4) in association with which, in use, a secondary light source is arranged to be disposed, the reflector member being arranged for connection to a support member (6) and the light fitting being characterised in that the secondary light source is the emission end of a bundle of optic fibres (10) which passes from the reflective surface portion (4) of the reflector member (2) through the support member to a primary light source.

2. A decorative light fitting as claimed in Claim 1 characterised in that the reflective surface portion (4) of the reflector member (2) is of three dimensional configuration.

3. A decorative light fitting as claimed in Claim 2 characterised in that the reflector member (2) is, in plan view, of circular cross-section and its reflective surface portion (4) is concave.

4. A decorative light fitting as claimed in Claims 1, 2 or 3 characterised in that the reflector member (2) is dependent from a stem (6) arranged to pass through a support board, the stem being arranged for securement to the support board.

5. A decorative light fitting as claimed in Claim 4 characterised in that the stem (6) is hollow and opens into the reflective portion (4) of the reflector member (2).

6. A decorative light fitting as claimed in Claim 5 characterised in that the stem (6) is arranged to carry the optic bundle (10) through the support board with the emission end (21) of the optic bundle (10) projecting into the reflective surface (4) of the reflector member (2).

7. A decorative light fitting as claimed in Claim 5 or 6 characterised by a securement member (22) including a collar (13) adapted to attach to the stem (6) immediately behind the reflector member (2), and a plurality of outwardly extending flexible tab members (14,15,16) capable of being resiliently folded to lie generally parallel to the hollow stem (6) such that, in mounting, the hollow stem (6) together with the folded tabs (14,15,16) can pass through the appropriate bore (20) in the support board, the tabs (14,15,16) being provided on their outer sides with surface features (17,18,19) arranged in use to engage the sides (23) of the bore (20) so as firmly to secure the fitting to the support board.

8. A decorative light fitting as claimed in Claim 7 characterised in that the collar (13) is arranged to be a fit within an annular groove about the stem (6) or behind shoulders (11,12) thereon closely adjacent to the reflector member (2).

9. A decorative light fitting as claimed in Claim 7 or 8 characterised in that the tabs (14,15,16) are formed of resilient plastics material, the outside surfaces thereof being provided with portrusions (17,18,19) across their width arranged to engage with the inner surface of the bore (20) and the support board.

10. A decorative light fitting as claimed in any one of Claims 5 to 9 characterised in that the stem (6) is provided with a plurality of longitudinal slits (7,8) in its wall to enable it to be compressed in its passage through the bore in the support board.

11. A decorative light fitting as claimed in Claim 10 characterised in that the stem (6) is formed of a stiffly resilient plastics material and is integral with the reflector member (2).

12. A decorative light fitting as claimed in any one of Claims 4 to 11 characterised in that the reflector member (2) is provided with a lip (5) around the reflective surface portion (4) thereof which is arranged in use to be seated against an outer surface of the support board, and the reflective surface portion (4) is arranged to be located within a recess in the support board.

13. A decorative light fitting as claimed in any one of the preceding Claims characterised in that the emission end (21) of the optic fibre bundle (10) is shaped to cooperate with the configuration of the reflective portion of the reflector member (4) to provide a decorative lighting effect in use.

14. A decorative light fitting as claimed in any one of Claims 1 to 12 characterised in that the emission end (21) of the optic fibre bundle (10) is located within a shaped bulb (26) projecting into the reflective portion of the reflector member.

## Patentansprüche

1. Dekorative Leuchte einschließlich eines Reflektorteils (2) mit einem reflektierenden Oberflächenabschnitt (4), mit dem in Verbindung eine sekundäre Lichtquelle angeordnet ist, um positioniert zu werden, wobei das Reflektorteil zur Verbindung an ein Tragelement (6) angeordnet ist und die Leuchte dadurch gekennzeichnet ist, daß die sekundäre Lichtquelle das Emissionsende eines Faserbündels (10) ist, das vom reflektierenden Oberflächenabschnitt (4) des Reflektorteils (2) durch das Tragelement zu einer primären Lichtquelle passiert.

2. Dekorative Leuchte gemäß Anspruch 1, dadurch gekennzeichnet, daß der reflektierende Oberflächenabschnitt (4) des Reflektorteils (2) dreidimensional ausgeführt ist.

3. Dekorative Leuchte gemäß Anspruch 2, dadurch gekennzeichnet, daß das Reflektorteil (2) in Draufsicht einen kreisförmigen Querschnitt hat und sein reflektierender Oberflächenabschnitt (4) konkav ist.

4. Dekorative Leuchte gemäß Anspruch 1, 2 oder 3, dadurch gekennzeichnet, daß das Reflektorteil (2) von einem Schaft (6) abhängig ist, der so angeordnet ist, daß er durch eine Trageplatte passiert, wobei der Schaft zur Befestigung an der Trageplatte angeordnet ist.

5. Dekorative Leuchte gemäß Anspruch 4, dadurch gekennzeichnet, daß der Schaft (6) hohl ist und sich in den reflektierenden Oberflächenabschnitt (4) des Reflektorteils (2) hinein öffnet.

6. Dekorative Leuchte gemäß Anspruch 5, dadurch gekennzeichnet, daß der Schaft (6) so angeordnet ist, um das Faserbündel (10) durch die Trageplatte zu tragen, wobei das Emissionsende (21) des Faserbündels (10) in den reflektierenden Oberflächenabschnitt (4) des Reflektorteils (2) hineinragt.

7. Dekorative Leuchte gemäß Anspruch 5 oder 6, gekennzeichnet durch ein Befestigungselement (22) einschließlich eines zur Anbringung direkt hinter dem Reflektorteil (2) am Schaft (6) angepaßten Rings (13) und eine Mehrzahl von sich nach außen erstreckenden biegsamen Lappen (14, 15, 16), die federnd gefaltet werden können, um allgemein parallel zu dem hohlen Schaft (6) zu liegen, so daß der hohle Schaft (6) beim Einbau zusammen mit den gefalteten Lappen (14, 15, 16) durch die entsprechende Bohrung (20) in der Trageplatte hindurchgeführt werden kann, wobei die Lappen (14, 15, 16) an ihren Außenseiten mit in der Anwendung so angeordneten Oberflächenmerkmalen (17, 18, 19) versehen sind, daß sie in die Seiten (23) der Bohrung (20) eingreifen, um die Leuchte fest an der Trageplatte zu befestigen.

8. Dekorative Leuchte gemäß Anspruch 7, dadurch gekennzeichnet, daß der Ring (13) so angeordnet ist, daß er in einer Ringnut um den Schaft (6) oder hinter daran befindlichen Schultern (11, 12) nahe bei dem Reflektorteil (2) sitzt.

9. Dekorative Leuchte gemäß Anspruch 7 oder 8, dadurch gekennzeichnet, daß die Lappen (14, 15, 16) aus federndem Kunststoff geformt und die Außenseiten dieser mit über ihre Breite zum Eingriff in die Innenfläche der Bohrung (20) und die Trageplatte angeordneten Erhebungen versehen sind.

10. Dekorative Leuchte gemäß einem der Ansprüche von 5 bis 9, dadurch gekennzeichnet, daß der Schaft (6) in seiner Wand mit einer Mehrzahl von Längsschlitzen (7, 8) versehen ist, damit er bei seinem Durchführen durch die Bohrung in der Trageplatte zusammengedrückt werden kann.

11. Dekorative Leuchte gemäß Anspruch 10, dadurch gekennzeichnet, daß der Schaft (6) aus einem steif-federnden Kunststoff geformt und in das Reflektorteil (2) integriert ist.

12. Dekorative Leuchte gemäß einem der Ansprüche von 4 bis 11, dadurch gekennzeichnet, daß der Reflektorteil (2) mit einer um den reflektierenden Oberflächenabschnitt (4) davon verlaufenden Lippe (5) versehen ist, die in der Anwendung so angeordnet ist, daß sie gegen eine Außenfläche der Trageplatte anliegt, und daß der reflektierende Oberflächenabschnitt (4) so angeordnet ist, daß er in einer Vertiefung in der Trageplatte zu liegen kommt.

13. Dekorative Leuchte gemäß einem der vorhergehenden Ansprüche, dadurch gekennzeichnet, daß das Emissionsende (21) des Faserbündels (10) so geformt ist, daß es mit der Ausführung des reflektierenden Oberflächenabschnitts des Reflektorteils (4) zusammenwirkt, um in der Anwendung einen dekorativen Beleuchtungseffekt zu liefern.

14. Dekorative Leuchte gemäß einem der Ansprüche von 1 bis 12, dadurch gekennzeichnet, daß das Emissionsende (21) des Faserbündels (10) innerhalb eines in den reflektierenden Oberflächenabschnitt des Reflektorteils hineinragenden geformten Kolbens (26) liegt.

## Revendications

1. Un luminaire décoratif, comportant un élément réflecteur (2) muni d'une section réfléchissante superficielle (4), en conjonction avec laquelle, en utilisation, une source lumineuse secondaire est prévue pour être agencée, l'élément réflecteur étant disposé en vue de sa connexion sur un support (6) et le luminaire étant caractérisé en ce que la source lumineuse secondaire est constituée par le côté émission d'un faisceau de fibres optiques (10) qui est acheminé de la section réfléchissante superficielle (4) de l'élément réflecteur (2), à travers le support jusqu'à une source lumineuse primaire.

2. Un luminaire décoratif, selon les stipulations de la revendication 1, qui se caractérise en ce que la section réfléchissante superficielle (4) de l'élément réflecteur (2) a une configuration tridimensionnelle.

3. Un luminaire décoratif, selon les stipulations de la revendication 2, qui se caractérise en ce que l'élément réflecteur (2), a une coupe transversale circulaire, quand il est vu en plan, et sa surface réfléchissante (4) est concave.

4. Un luminaire décoratif, selon les stipulations des revendications 1, 2 ou 3, qui se caractérise en ce que l'élément réflecteur (2) dépend d'une tige (6) agencée de manière à passer par une plaque de support, la tige étant agencée en vue d'une fixation sur la plaque de support.

5. Un luminaire décoratif, selon les stipulations de la revendication 4, qui se caractérise en ce que la tige (6) est creuse et s'ouvre sur la section réfléchissante (4) de l'élément réflecteur (2).

6. Un luminaire décoratif, selon les stipulations de la revendication 5, qui se caractérise en ce que la tige (6) est agencée de manière à acheminer le faisceau de fibres optiques (10) à travers la plaque de support, alors que le côté émission (21) du faisceau de fibres optiques (10) projette sa lumière sur la surface réfléchissante (4) de l'élément réflecteur (2).

7. Un luminaire décoratif, selon les stipulations de la revendication 5 ou 6, qui se caractérise en ce qu'un élément de fixation (22), y compris un collier (13) a été adapté de manière à se fixer sur la tige (6) immédiatement derrière l'élément réflecteur (2), et plusieurs languettes flexibles se prolongeant vers l'extérieur (14, 15, 16), aptes à se plier de façon élastique pour être généralement parallèles à la tige creuse (6), de telle sorte que, lors du montage, la tige creuse (6) ainsi que les languettes pliées (14, 15, 16) puissent passer par l'alésage approprié (20) dans la plaque de support, les languettes (14, 15, 16) étant munies, sur leurs faces externes, de caractéristiques superficielles (17, 18, 19) agencées, en utilisation, pour s'engager dans les côtés (23) de l'alésage (20), de façon à fermement assujettir le luminaire sur la plaque de support.

8. Un luminaire décoratif, selon les stipulations de la revendication 7, qui se caractérise en ce que le collier (13) est agencé de manière à se trouver à ras, dans une rainure annulaire autour de la tige (6) ou derrière les épaulements (11, 12) prévus sur celle-ci, et étroitement adjacents à l'élément réflecteur (2).

9. Un luminaire décoratif, selon les stipulations de la revendication 7 ou 8, qui se caractérise en ce que les languettes (14, 15, 16) sont fabriquées en un matériau plastique souple, les surfaces externes de celles-ci étant munies de parties saillantes (17, 18, 19), en travers de la largeur, et agencées de manière à s'engager avec la surface interne de l'alésage (20) et la plaque de support.

10. Un luminaire décoratif, selon les stipulations de l'une quelconque des revendications 5 à 9, qui se caractérise en ce que la tige (6) est munie de plusieurs fentes longitudinales (7, 8) dans sa paroi, pour lui permettre de recevoir une force de compression lors de son passage par l'alésage prévu dans la plaque de support.

11. Un luminaire décoratif, selon les stipulations de la revendication 10, qui se caractérise en ce que la tige (6) est fabriquée en un matériau plastique rigide et fait partie intégrante de l'élément réflecteur (2).

12. Un luminaire décoratif, selon les stipulations de l'une quelconque des revendication 4 à 11, qui se caractérise en ce que l'élément réflecteur (2) est muni d'une lèvre (5) autour de la section réfléchissante superficielle (4), qui est agencée, en utilisation, de façon à être logée contre une surface externe de la plaque de support, et la section réfléchissante superficielle (4) est agencée de façon à être logée dans un évidement pratiqué dans la plaque de support.

13. Un luminaire décoratif, selon les stipulations de l'une quelconque des revendications précédentes, qui se caractérise en ce que le côté émission (21) du faisceau de fibres optiques (10) est façonné de manière à s'harmoniser avec la configuration de la section réfléchissante de l'élément réflecteur (4) en vue d'offrir un effet lumineux décoratif en utilisation.

14. Un luminaire décoratif, selon les stipulations de l'une quelconque des revendications 1 à 12, qui se caractérise en ce que le côté émission (21) du faisceau de fibres optiques (10) se trouve à l'intérieur d'une ampoule façonnée (26) projetant sa lumière sur la section réfléchissante de l'élément réflecteur.
